# EUROPEAN PATENT APPLICATION

(11) **EP 1 519 604 A1**
(43) Date of publication of application: **30.03.2005**
(21) Application number: 03022101.4
(22) Date of filing: 29.09.2003
(51) Int. Cl.: H04Q 7/38

(54) **Method for authentication of a mobile node to a wireless access network**

(71) Applicant: SIEMENS AKTIENGESELLSCHAFT, 80333 München (DE)
(72) Inventor: Eisl, Jochen, 85748 Garching (DE); Hepworth, Eleanor, Southampton SO14 6HZ (GB)

(57) **Abstract**

Method for authentication and/or authorization of a mobile node to a wireless access network, whereby the mobile node, the air interface and the wireless access network comprise a service network for providing services to a user of the mobile node, to provide an authentication and authorization mechanism for temporary subscriptions, which is reliable and easy to implement, and which takes into account current user location, i.e. mobility, whereby a self-authenticating token for temporary subscription is generated by a code generation server external to the service network, authentication/authorization information is derived from the token by the mobile node, and the mobile node utilizes the authentication/authorization information to authenticate and/or authorize itself to an authentication/authorization server located in the service network.

## Description

The invention relates to a method for authentication and/or authorization of a mobile node to a wireless access network.

Commercial and non-commercial operators of communication networks need to establish means to protect network resources against unauthorized and unpriviledged access of potential users. Mechanisms of network access control are implemented by authentication and authorization principles.

Authentication of a user requires provision of user specific information that describes the user identity including some means for secure authentication. Authentication can happen either with or without user interaction (e.g. login screen vs. smard card access) After successful authentication, user profile information determines the details about service access for the user, e.g. what services at what time a user can subscribe to under specific conditions and circumstances.

The implemented concepts lack support for authentication and authorization means for temporary subscriber service in a public wireless access network. For instance, wireless hotspot networks in urban areas, which are typically based on WLAN (Wireless Local Area Network) technology, are increasingly popular. These networks may be statically deployed at ground or are attached to passenger transportation vehicles.

User mobility introduces additional facets into the authentication and authorization process. Roaming and handover of mobile users to wireless access networks need specific mechanisms to be taken into account to enable continued service access for the mobile user.

Handover aspects for temporary subscription become relevant, if a mobile user changes the point of wireless access, e.g. moves between different vehicles (e.g. two trains at a station) or a fixed network and a moving network (e.g. a train and a hotspot network in a train station).

Usually roaming agreements between different mobile network operators are the basis for continued service access. The general concept relies on the principle that user profile information is transferred between a mobile user's home network (or home domain) to a currently visited network (or domain). However, the mobile user in this scenario has a permanent subscription, e.g. there is a central server instance, which keeps authentication and authorization information for the mobile users.

Thus, state-of-the-art authentication and authorization mechanisms rely on fixed subscriptions and therefore keep the number of potential customers in narrow limits. Furthermore, known authorization mechanisms in general do not take into account current user location, i.e. mobility.

Temporary users (i.e. those without long term subscriptions to the network or one of its roaming partners) require some low overhead subscription mechanism to allow users to access the network. Current systems let users purchase scratch cards, which grant access to the network for a certain amount of time. The validity of these scratch cards is managed by a central server that ensures that the code is not used by more than one person, and refuses access to the user when the code has expired.

In addition, the concept of authentication "tickets" that may contain authorization information has been discussed within the Kerberos Network Authentication Service. In this scheme, clients request a ticket from a Ticket Granting Service, and may then use this to authenticate with an application server.

The ticket may contain authorization information such as the expiration time for the ticket, but the authorization information is not specified within the specification of Kerberos, the ticket is simply designed to allow this information to be transported.

Furthermore, the deployment scenarios and usage of Kerberos are not reasonably applicable to the problem of temporary subscription in a mobile or wireless environment as sketched above.

Also, in general the authorization information appropriate in the Kerberos case is different to that used in the mobile network scenarios (although there are some overlaps).

Therefore it is an object of the present invention to provide an authentication and authorization mechanism for temporary subscriptions, which is reliable and easy to implement, and which takes into account current user location, i.e. mobility.

The invention is based, amongst others, on the idea, for enabling temporary subscription, to process authentication and authorization requests locally, i.e. without relying on a centralized authentication server, and to include authorization information associated with that user to control their access.

Especially in vehicular and other moving networks, the local authorization mechanism can be extended to include additional aspects of user or network location into the decision process.

The invention combines both above-described auhentication mechanisms (scratch cards and the Kerberos standard) known from the art into a low management, flexible authentication and authorization scheme to support temporary subscribers accessing a network service.

In particular, the inventive method for authentication and/or authorization of a mobile node to a wireless access network is based in a first step on generation of a self-authenticating token for temporary subscription by a code generation server external to a service network, which is comprised by the mobile node, the air interface and the wireless access network and the aim of the service network is to provide services to a user of the mobile node.

In the following step of the inventive method, authentication/ authorization information derived from the token is provided to the mobile node, i.e. a mobile user knows how to access the service network and possibly what services are granted by the system. Eventually, the mobile node utilizes the authentication/authorization information to authenticate and/or authorize itself to an authentication/authorization server located in the service network.

In a preferred embodiment of the method of the invention, code generation and authentication/authorization is based on a shared key mechanism.

In a further developed embodiment of the invention, the token is generated independent from the configuration and/or properties of the mobile node and the authentication/ authorization server and/or is generated independent from the user.

In an alternative embodiment, the token is generated dependent from the configuration and/or properties of the authentication/authorization server.

In further embodiments, the token is generated prior to a generation request from the service network.

Thus, the shared key is either preconfigured for the server components of the authentication and authorization system or derived by some other means.

In a preferred embodiment of the method according to the invention, the token resp. the authentication code includes within it some structurally enriched authorization data, that enables fine-tuned control to resources and services of the public wireless access network. The elements of the structured authorization data comprise one or more of the following authorization elements:
- calendar date, which specifies the date of access as a single day or a time interval in days
- time of day, which specifies the time of day as starting time or time interval
- number of users, which specifies a maximum number of possible concurrent sessions with the public wireless access network
- service privileges, which specifies the services or service class that can be accessed by the temporary subscription
- user data volume, which specifies the amount of data that can be received or transmitted by the temporary subscription
- network classification, which specifies the type/class of public wireless access network that can be accessed in case there is a choice between several different access networks
- location information.

The elements of structured authorization data can individually represent a condition for determining authorization of a temporary subscription. Acording to a further aspect of the invention, a plurality of authorization elements are combined to form a complex condition for determining authentication and/or authorization in the authentication/ authorization server. Thus, some or all of these elements can be used in combination to form a complex condition for determining the authorization. Elements of structured authorization data can be combined by applying boolean operations between the individual elements.

In an embodiment, where this inventive method is developed further, resource consumption for time and/or volume based authorization elements is metered and recorded in the service network and this resource consumption is suspendable upon request transmitted from the mobile node to the authentication/authorization server.

Thus, a mechanism to inform one or more users of the temporary subscription about the progress of resource consumption is possible. The user can be informed on request. In an alternative embodiment, when pre-configured threshold values are exceeded for one or more metered authorization elements of the data, a resource information concerning the amount of resource consumption is transmitted from the authentication/authorization server to the mobile node. In this way, an arrangement implementing the invention can provide for a notification service.

Referring to handover and roaming support for temporary subscription to other wireless access networks, handover describes the transfer of application sessions and roaming describes methods for re-authentication to a different access network.

Handover support is possible either with advanced preparation or after the mobile host associated with the temporary subscription changed access networks. Either the generated code for temporary subscription can be continuously used in the different public wireless access network or a new code needs to be generated for the purpose of handover or roaming. Context related to the authentication and authorization is transferred between the different access networks to support handover and roaming in the described case.

Thus, in an embodiment of the invention, authentication/authorization related context data is transferred from the authentication/authorization server to a second wireless access network to which a handover of the mobile node is performed.

In a further embodiment of this method, the token is reused for authentication/authorization of the mobile node in the second wireless access network.

In further embodiments of the inventive method the temporary subscription is restricted to
- one or more devices by registering specific device parameters with the first authentication/authorization and/or
- one or more users by registering personal information with the first authentication/authorization.

Thus, the mechanism explicitly allows or restricts sharing of temporary subscription among different mobile users and devices. Restricting the temporary subscription to a single device is enforced by registering specific configuration device parameters with the first authentication. Restricting the temporary subscription to a single user is enforced by registering personal information from a mobile user during first authentication.

A token for temporary subscription can be obtained as part of advanced code generation process either by an administrative authority or triggered by a mobile user that provides some means of sufficient credentials for the code generation process. Therefore, in another embodiment of the inventive method, the provision of the token-based authentication/authorization information to the mobile node is triggered by transmission of credentials from the mobile node to the code generating server.

Apart from triggering the generation of a new token, the authentication and authorization system may expand the lifetime of an elapsed token for extended usage. Thus, in still other embodiments of the inventive method, the lifetime of a token is extendable by the authentication/ authorization server or the code generation server, in particular upon request transmitted from the mobile node.

An arrangement for authentication and/or authorization of a mobile node to a wireless access network according to the invention, whereby the mobile node, the air interface and the wireless access network comprise a service network for providing services to a user of the mobile node, comprises
- a central code generation server, located external to the service network, adapted to generate a self-authenticating token for temporary subscription, whereby authentication/authorization information derived from the token is provided to the mobile node, and
- an authentication/authorization server, located in the service network, adapted to authenticate and/or authorize the mobile node based on the authentication/authorization information derived from the token.

In other words, the authentication and authorization arrangement consist of an authentication server, which is located local to a serving wireless access network, a local authorization server possibly co-located with the authentication server or deployed as a separate entity, and a code generation server. Thus, an authentication and authorization arrangement according to the invention enables local authentication of temporary subscribers to wireless access networks.

A self-authenticating token, generated by a code generation server, is provided to a temporary subscriber to enable access to network services of a public wireless access network. The generated token is used to perform authentication and authorization control local to the public wireless access network a temporary subscriber is currently connecting to.

In an embodiment of the inventive arrangement, the authentication/authorization server is adapted to exchange and establish a shared key with the code generation server, which is essential to let the authentication/authorization server correctly interpret the generated tokens.

In a further embodiment, the mobile node is adapted to derive authentication/authorization information based on the received token.

In a further developed embodiment, the authentication/authorization server is adapted to derive authentication/authorization information based on the token that is provided by the mobile user, when connecting to the service network.

In further embodiments of the inventive arrangement, the authentication/authorization server is adapted to transfer the context related to authentication/authorization of the mobile node to a second access network.

An embodiment of the inventive method concerns the possibility to suspend resource consumption for volume and time based authorization elements in temporary subscriptions. For this purpose a metering of resource consumption takes place in an embodiment of the inventive accounting and authorization arrangement. In a particular embodiment, the authentication/authorization server meters and records resource consumption for time and/or volume based authorization elements of the temporary subscription and is adapted to suspend the resource consumption upon request transmitted from the mobile node.

The invention has a number of advantages:
- It provides a low cost, low overhead mechanism to enable operators to support temporary user access to their services without the need for backend servers tracking valid and invalid authentication codes. This allows for a larger customer base to access the services, with a corresponding increase in revenue for the operator.
- It allows users to authenticate "locally" within the service network i.e. without having to refer to some central authentication server (which is faster).
- Temporary subscription based on versatile different authorization aspects, e.g. simultaneous access by a group of mobile users enables operators of wireless access networks to offer a variety of access based services and charging models
- Possibility to restrict provisioning of network services to specific devices and mobile users supports network operators objective to limit resource usage and protect their business
- Flexible and easy to handle mechanisms to obtain tokens enables the mobile user to spontaneously purchase access to network service on demand and use the purchased token immediately. This might lead to an increased usage of network services
- Suspension of resource consumption fosters acceptance of customer to subscribe to temporary services, since the subscription may be used more than once, e.g. not just for a single journey on train and is not lost, if not completely consumed.
- Roaming and handover for temporary subscription between different public wireless access networks
- Convenient service about current resource consumption

Further aspects and advantages of the invention will be described below with respect to the appended drawings, which show:
- Fig. 1: an example topology for a vehicular network with connectivity to external network(s);
- Fig. 2: an approach for network mobility with double tunneling;
- Fig. 3: an example of a message flow for a moving Hotspot with local Authentication/Authorization and Handover support.

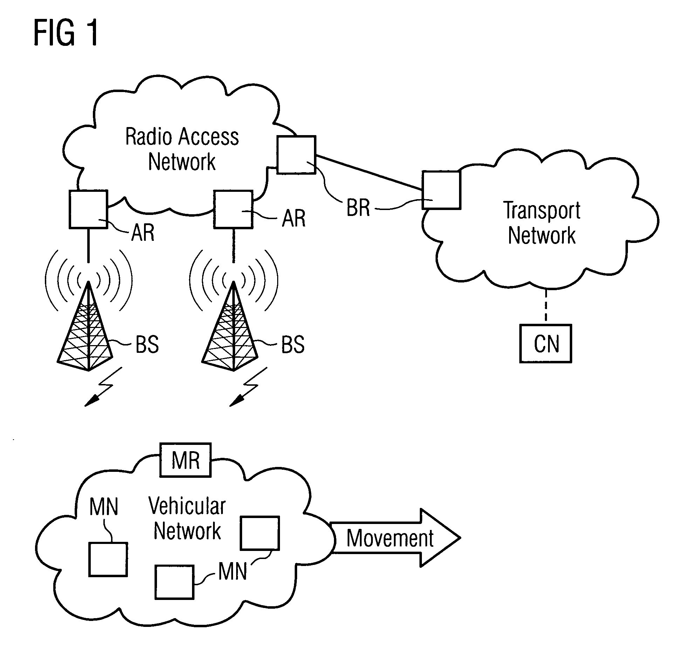

The problem of authenticating/authorizing mobile users with temporary subscription and the inventive solution will further be described with respect to a basic network topology which is schematically shown in Fig. 1.

The situation is either described by mobile nodes MN that independently move into similar directions with similar speed or a group of nodes MN that travel as a single unit. The significant attributes that constitute such a moving network can be described by the common movement behaviour of the individual nodes within a reference system and the relative adjacency of the individual nodes throughout the considered time interval.

An important embodiment is a managed vehicular network, which is located inside a vehicle and provides access to travelling customers, e.g. in a train. "Managed" in this context refers to the circumstance that network infrastructure in a public passenger transportation vehicle is owned and operated by administrative organizations that identify a value chain for offering electronic communication, information and entertainment services to its customers. The infrastructure provided to the user might also comprise the mobile nodes itself, e.g. on-board terminals in a train.

The connectivity to external network(s) is also illustrated in Fig. 1. Several mobile nodes MN1...MN3 authenticate with a vehicular network. There are several potential reasons why a mobile node wants to get access through the vehicular network instead of having a direct connection with the ground network, which are known to the skilled person.

A mobile router MR, which represents the gateway node, maintains connectivity to the ground via one or more radio access networks. The moving network may be connected to external networks through more than one MR, but in the following description only a single MR is assumed for the reason of simplicity.

While the network is on move, the mobile router MR may have to re-establish connection with new candidate access routers AR and even new candidate access networks. Some of the mobile nodes MN may establish communication with correspondent nodes CN outside the moving network and especially want to maintain continuous connectivity and reachability with a home network. Then, a new connection from a correspondent node to a mobile node needs to be routed properly to the current location of the moving network. Possibly location updating is necessary for a considerable number of mobile nodes, dependent on the individual requirement of each of these nodes to maintain reachability.

Another possible realization of such a moving network is a personal area network (PAN), with a number of mobile nodes forming a spontaneous collaborative ad hoc network, where some of these nodes may act as gateway nodes to external networks.

The radio access network (including the access routers AR and base stations BS) and the vehicular network (including the mobile router MR) and the air interface between both is seen as forming a service network for providing services to a user of the mobile node MN. The mobile node itself might be part of the service network, if it offers the user some services without any authentication, e.g. informations regarding the train's speed, location, next stop, etc., or might be seen as being external to the service network, insofar it is owned by the user, who firstly has to connect it to the network, e.g. the train's Ethernet, or does not provide the user any service prior to authentication.

The service network connects via border routers BR to transport network(s), which provide(s) connectivity to the correspondent node.

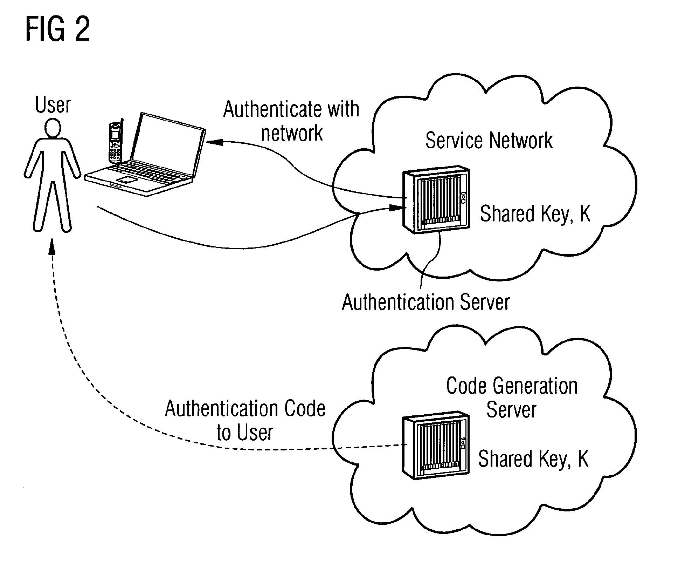

Fig. 2 illustrates the concept of authenticating a user with the vehicular network, resp. the service network. The invention provides users with a self-authenticating token (in the embodiment shown, an authentication code to the user) that is verified by an authentication server somewhere in the service network, i.e. in the vehicular network or the access network. In other words, it is likely that the authentication server is local to the network that the user is attempting access. The mentioned illustration assumes that a shared key has been successfully exchanged and established between authentication/authorization server and the code generation server to enable correct interpretation of the generated token.

The authentication code is generated by a code generation server which can be placed deeper within the network, i.e. outside the service network. The same code generation server can be deployed, independent from the momentarily used access network and access router.

For code generation, a pre-configured or locally derived key can be deployed. The authentication server that is responsible for authenticating the user also knows this keying information (in this embodiment, the shared key K) and is able to validate the authentication code and retrieve the authorization information.

The authentication code includes within it some authorization information that limits access to the network in some way. For example, user access could be limited based on one or a combination of:
- Date information - so the code is only valid for a particular day
- Location information - so the code only works for a particular network in a particular location, or between locations (for mobile networks on vehicles)
- Number of users - so the code is valid for a certain number of users, for example, if a company buys access for 5 employees
- Service Privileges - so local service information about what services the user is allowed to access (gold, silver, bronze packages) is provided
- Data volume - so the user is only authorized to send a particular volume (number of bytes) of data
- Time - so the authorization for the user expires after a certain time, e.g. 30 minutes.

When used with volume based or time based authorization information, it is likely that the user may want to temporarily halt their resource usage and resume use at a later point in time. In this case, some state needs to be maintained in order to allow the usage information to be retained i.e. if the user has a 30 minute subscription and has been logged in for 10 minutes, then 20 minutes of remaining service usage need to be recorded somewhere.

This aspect is particularly relevant if the user changes network (hands-over) and wishes to use the same temporary subscription in the new network. In this case, either context information can be maintained in the local authentication server, and exchanged directly between servers in different networks when necessary, or the user can be issued a new authentication code with revised authorization information for logging into the network when handover is completed.

The user can purchase a code in a number of ways, but the details of how codes are provided to the user and the methods of payment are dependent on the deployment scenario selected by the operator (see example below).

A worked example resp. use case of how the invention can be deployed, is described next.

Fred is a tourist from Australia. He is currently in Europe on a sightseeing trip to visit some famous cities and also some friends all over Germany. He is currently in Munich and enters a train that brings him to Karlsruhe, but he needs to change train there to arrive his next destination in Freiburg, where he plans to visit an old friend.

European trains now partly offer wireless hotspot services with Internet Connectivity and all kinds of local train services for gaming and entertainment. Passengers can either bring their own equipment and connect to the network services through WLAN or Bluetooth access points or use the train built-in equipment, i.e. there are some terminals and screens built into passenger's rear seats.

Fred is fancy about using network services from the train, but unfortunately there is no roaming agreement between the local train operator and the mobile network operator in Australia, Fred has a subscription with. A train guide informs Fred that the hotspot offers access also to users without fixed customership. This kind of access is based on a temporary subscription.

Purchasing of network access is possible on scratch card principle, i.e. a customer may buy a combined ticket for traveling and temporary network subscription. This way a customer can obtain a token for temporary access. Authentication and authorization is granted on temporary data for user ID and password given to the user. Unfortunately Fred's travel agency booked all travel tickets in advance, so Fred can't benefit from the train's company prepaid system offered to temporary customers.

However, the train guard notifies Fred about the possibility to obtain spontaneous access based on credit card credentials.

After providing specifics about the hotspot services, Fred has to specify the principles for the validity of the temporary subscription. Fred decides to purchase a token for location based access, i.e. he buys a ticket, which is valid for hotspot access in trains between Munich and Freiburg. The system informs him, that even he has to change the train there is continuous hotspot access for the temporary subscription mode.

After Fred confirmed all details about the train hotspot services, a code generation server outside the train provides a token for instant train network access. The token comes with a user ID and password for the chosen subscription. This is requested by the train's local authentication and authorization system. The details are printed on a paper ticket.

Alternatively a user can ask the system to provide the details of the purchased services by means of an electronic messaging system. Fred can logon immediately to the train services using a train built-in electronic equipment, because the local AA server accepts the token that is provided from the distant code generating server.

Some minutes before Fred has to change the train in Karlsruhe, he is informed by the trains authentication/authorization system about this event and that a new token has been generated for him to be used in the train that runs between Karlsruhe and Freiburg.

The new token either may be associated with the same combination of user ID and password or with a different one. After Fred enters the train to Freiburg he connects to the train network Services using the combination of user ID and password, which are associated with the new token generated by the local authentication/authorization system in this train.

In the meanwhile the authentication/authorization system in the train arriving from Munich recognizes that the original token generated for Fred is invalid and that there is no further authorization for this train network anymore.

The train company operates also hotspots in train stations and therefore assists mobile users to change between a train and a static hotspot network for continuous access to network services.

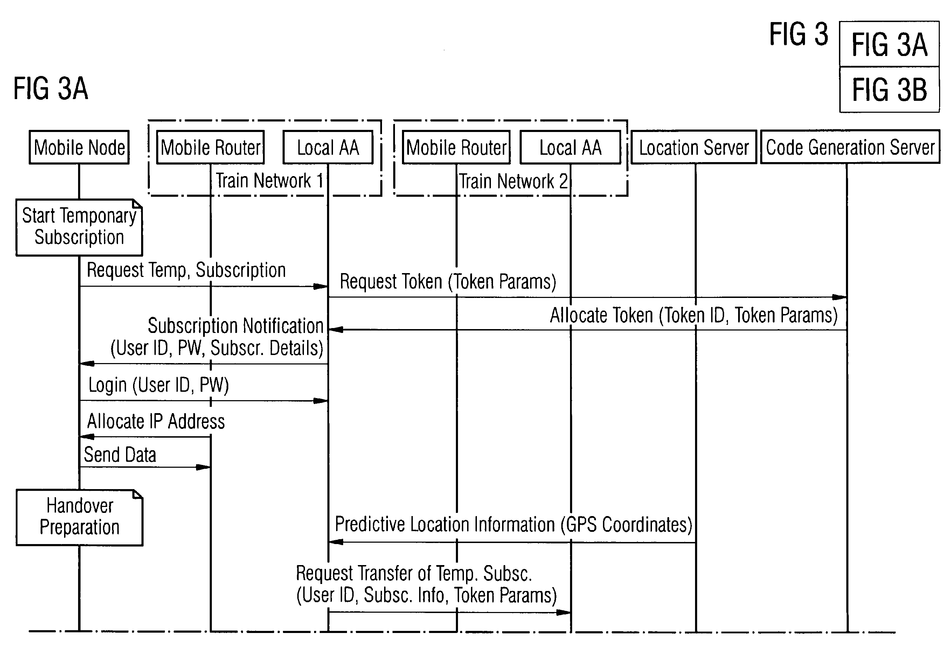

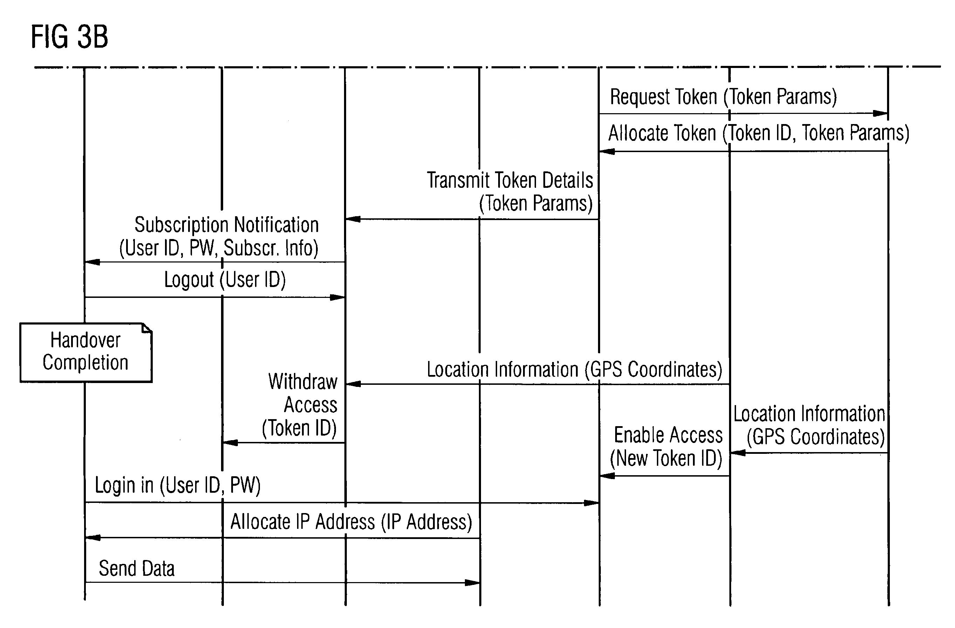

An example message flow for local authorization and accounting in a public wireless moving network is illustrated in Fig. 3.

In this embodiment, the local authentication/authorization server (local AA) is situated near the mobile router in the vehicular network (the train network 1 and 2, respectively). The mobile node might be a notebook, PDA or other mobile device of the user, and is shown as external node to the train network(s). The code generation server is located somewhere outside the service network. From the latter, only the train network is explicitly shown and the access network is omitted in the sequence diagramm.

On request from the mobile node, and transmitted via the local authentication server, the code generation server generates a token. Authentication information derived from that token is transmitted to mobile node by some predefined means, again via the authentication server, which thereby automatically possesses the data required to authenticate the user. After successful login, the authentication server requests the mobile router to enable access of the mobile node to the service network and the further connected networks (for example, the internet) within the constraints given by the authorization elements specified in the token.

Furthermore, in Fig. 3 an exemplary handover procedure with context transfer related to the temporary subscription data is illustrated. Prior to the establishment of a new connection via a second vehicular network, authentication information related to a temporary subscription valid for the second network is transferred to the mobile node. This does not require action from the mobile node, but might be triggered automatically (from the point of view of the user) by a location server (see the example of Fred on his arrival in Karlsruhe above). Without further procedural details, as would be required for code generation servers integrated in the local authenticaton servers in the train networks, the user can logon immediately in the second network.

The invention is not restricted to the above described specific aspects and embodiments but can also be carried out in numerous modifications and combinations thereof.

## Claims

1. Method for authentication and/or authorization of a mobile node to a wireless access network, whereby
the mobile node, the air interface and the wireless access network comprise a service network for providing services to a user of the mobile node,
**characterized in that**
a self-authenticating token for temporary subscription is generated by a code generation server external to the service network,
authentication/authorization information derived from the token is provided to the mobile node, and
the mobile node utilizes the authentication/authorization information to authenticate and/or authorize itself to an authentication/authorization server located in the service network.

2. Method according to claim 1,
**characterized in that**
code generation and authentication/authorization is based on a shared key mechanism.

3. Method according to claim 1 or 2,
**characterized in that**
the token is generated independent from the configuration and/or properties of the mobile node and the authentication/authorization server and/or independent from the user.

4. Method according to claim 1 or 2,
**characterized in that**
the token is generated dependent from the configuration and/or properties of the authentication/authorization server.

5. Method according to one of the preceding claims,
**characterized in that**
the token is generated prior to a generation request from the service network.

6. Method according to one of the preceding claims,
**characterized in that**
the token includes authorization data, which comprise one or more of the following authorization elements:
- calendar date,
- time of day as starting time or time interval
- number of users,
- service privileges,
- user data volume to be received and/or transmitted,
- network classification,
- location information.

7. Method according to claim 6,
**characterized in that**
a plurality of authorization elements are combined to form a complex condition for determining authentication and/or authorization in the authentication/authorization server.

8. Method according to one of claims 6 or 7,
**characterized in that**
resource consumption for time and/or volume based authorization elements is metered and recorded in the service network and this resource consumption is suspendable upon request transmitted from the mobile node to the authentication/authorization server.

9. Method according to claim 8,
**characterized in that,**
when pre-configured threshold values are exceeded for one or more metered authorization elements of the data, a resource information concerning the amount of resource consumption is transmitted from the authentication/authorization server to the mobile node.

10. Method according to any one of the preceding claims,
**characterized in that**
authentication/authorization related context data is transferred from the authentication/authorization server to a second wireless access network to which a handover of the mobile node is performed.

11. Method according to claim 10,
**characterized in that**
the token is reused for authentication/authorization of the mobile node in the second wireless access network.

12. Method according to any one of the preceding claims,
**characterized in that**
the temporary subscription is restricted to
- one or more devices by registering specific device parameters with the first authentication/authorization and/or
- one or more users by registering personal information with the first authentication/authorization.

13. Method according to any one of the preceding claims,
**characterized in that**
the provision of the token-based authentication/authorization information to the mobile node is triggered by transmission of credentials from the mobile node to the code generating server.

14. Method according to any one of the preceding claims,
**characterized in that**
the lifetime of a token is extendable by the authentication/authorization server or the code generation server, in particular upon request transmitted from the mobile node.

15. Arrangement for authentication and/or authorization of a mobile node to a wireless access network according to one of the preceding claims, whereby
the mobile node, the air interface and the wireless access network comprise a service network for providing services to a user of the mobile node,
**characterized by**
a central code generation server, located external to the service network, adapted to generate a self-authenticating token for temporary subscription, whereby the mobile node derives authentication/authorization information from the token provided to the mobile node, and
an authentication/authorization server, located in the service network, adapted to authenticate and/or authorize the mobile node based on the authentication/authorization information derived from the token.

16. Arrangement according to claim 15,
**characterized in that**
the authentication/authorization server and the code generation server exchange and establish a shared key to enable correct interpretation of generated tokens.

17. Arrangement according to claim 16,
**characterized in that**
the mobile node is adapted to derive authentication/authorization information based on the received token.

18. Arrangement according to any one of claims 15 to 17,
**characterized in that**
the authentication/authorization server is adapted to transfer the context related to authentication/authorization of the mobile node to a second access network.

19. Arrangement according to any one of claims 15 to 18,
**characterized in that**
the authentication/authorization server meters and records resource consumption for time and/or volume based authorization elements of the temporary subscription and is adapted to suspend the resource consumption upon request transmitted from the mobile node.
